# EUROPEAN PATENT APPLICATION

(11) **EP 2 164 290 A1**
(43) Date of publication of application: **17.03.2010**
(21) Application number: 09170234.0
(22) Date of filing: 14.09.2009
(51) Int. Cl.: H04W 36/30

(54) **Apparatus and method for transmitting data over a wireless network**

(30) Priority: 14.09.2008 US 210197
(71) Applicant: Norav Medical Ltd., Israel (IL)
(72) Inventor: Kannar, Yehuda, Israel (IL); Vainshtein, Boris, Israel (IL)
(74) Representative: McCrann, Sarah Ann

(57) **Abstract**

The subject matter discloses a wireless transmitter comprising a network interface for receiving and transmitting the data; storage for storing the data received at the transmitter by the network interface; a processor for handling the data stored in the storage and determining the work channel; and an indicating module for indicating to the processor that a level of quality of service provided in transmitting the data to the receiver such that the transmitter is capable of switching the work channel as a function of the level of quality of service. The data may be medical related data, more specifically ECG data.

## Description

### INTRODUCTION

The present invention relates to wireless transmission in general, and to a method of switching a wireless channel in particular.

When transmitting data in a wireless communication environment, various kinds of interruptions may occur and prevent sufficient Quality of Service (QoS) to be provided from a transmitter to a receiver of wireless signals representing the data. Such interruptions may be caused by other transmissions over the same frequency band, or in case the distance between the transmitter and the receiver exceeds a permitted length.

When an interruption to the transmission occurs, one solution is to switch the channel. Previously known systems provide for wirelessly transmitting data, while periodically changing the frequency of the channel, i.e. by modulating the signal. This frequent modulation comes to prevent stationarity in the transmitted data. Further, according to such systems, a user, such as a technician, is required in order to switch the channel. As a result, channels are not switched according to transmission problems, and such periodic channel switches result in reducing the QoS.

The problem of switching channels is also addressed by Bluetooth protocol, which modulates the channels every predetermined period of time, for example every 600 micro seconds. This way, both the receiver and transmitter switch channels simultaneously with no data loss and sufficient synchronization. However, Bluetooth protocol requires massive overhead that prevents real time transmission that may be crucial when transmitting data related to medical or physical parameters, such as ECG data, ultrasound and the like. Such information may be crucial because human life may depend on the accuracy of the information transmitted. Further, Bluetooth requires a significantly larger amount of current than regular wireless transmission, which is problematic in terms of the battery life of wireless devices.

In view of the above, a new system and method for switching channels during wireless transmission of medical related data is desired.

### STATEMENTS OF INVENTION

It is an object of the subject matter to disclose a transmitter operating in a system for transmitting data from a transmitter to a receiver via a work channel over a wireless network, the transmitter comprising: a network interface for receiving and transmitting the data; storage for storing the data received at the transmitter by the network interface; a processor for handling the data stored in the storage and determining the work channel; and an indicating module for indicating to the processor that a level of quality of service provided in transmitting the data to the receiver such that the transmitter is capable of switching the work channel as a function of the level of quality of service.

In some embodiments, the indicating module comprises a buffer residing in the transmitter; said buffer contains the data before transmitted to the receiver. In some embodiments, the data is removed from the buffer upon transmission to the receiver. In some embodiments, the indicating module indicates the level of quality of service as a function of the data accumulated in the buffer in case said data is not transmitted to the receiver. In some embodiments, the storage comprises data related to a plurality of work channels; said data indicates the next work channel to switch. In some embodiments, the data is transmitted in a 2.4GHz band. In some embodiments, the data is ECG data. In some embodiments, the processor determines to switch a channel until the amount of data in the buffer is lower than a predefined value.

It is another object of the subject matter to disclose a method of transmitting wireless data, comprising storing data sent from a data source to a transmitter module in a buffer; indicating a level of quality of service provided by the transmitter module as a function of an amount of data stored in the buffer.

In some embodiments, the method further comprises a step of switching a work channel in case the amount of data stored in the buffer is higher than a predefined value. In some embodiments, the method further comprises a step of transmitting the data stored in the buffer. In some embodiments, the method further comprises a step of removing data from the buffer upon transmission of the data.

In some embodiments, switching the work channel is performed until the amount of data stored in the buffer is lower than a predefined value. In some embodiments, the method further comprises a step of sampling the data from the data source.

It is another object of the subject matter to disclose a wireless transmitter module, comprising a buffer containing data sampled from a data source that transmits the data to the wireless transmitter module, wherein said data is accumulated in the buffer when a work channel used by the wireless transmitter module is interfered wherein the buffer indicates the wireless transmitter module in case the data accumulated in the buffer exceeds a predefined value.

In some embodiments, the wireless transmitter module switches the work channel upon indication from the buffer.

It is another object of the subject matter to disclose a wireless transmission system, comprising a detecting module; a transmitter module receives medical related data from a detecting module via one or more channels; a sampling module for sampling the data received by the one or more channels; a receiver module for receiving the medical related data from the transmitter module over a channel sampled by the sampling module; wherein the transmitter module switches the work channel upon indication from the sampling module.

### BRIEF DESCRIPTION OF THE DRAWINGS

Exemplary non-limited embodiments of the disclosed subject matter will be described, with reference to the following description of the embodiments, in conjunction with the figures. The figures are generally not shown to scale and any sizes are only meant to be exemplary and not necessarily limiting. Corresponding or like elements are designated by the same numerals or letters.
Fig. 1 shows a communication environment used for wireless transmission of medical related data, in accordance with some exemplary embodiments of the subject matter;
Fig. 2 shows a wireless data transmitter, in accordance with some exemplary embodiments of the subject matter;
Fig. 3 shows a wireless data receiver, according to some exemplary embodiments of the disclosed subject matter;
Fig. 4 shows a flowchart of a communication protocol used for transmitting data over a wireless network, according to an exemplary embodiment of the subject matter; and
Fig. 5 shows a flowchart of the steps performed by the transmitting side while transmitting wireless data according to some exemplary embodiments of the disclosed subject matter.

### DETAILED DESCRIPTION OF THE PREFERRED EMBODIMENT

One technical problem addressed by the disclosed subject matter is to automatically switch a work channel in case of interference in data transmission in a wireless network. Such work channel is the channel used to transmit data from a transmitter to a receiver, and may function as a mechanical or electrical channel. Switching channels without relevance to the QoS results in loss of time in which data is not received at the receiving side, while switching channels rarely, for example every two seconds, may result in feeling the buffer in the transmitting side. Further, the subject matter handles real time trigger-out over wireless networks, and provides real time data transmission related to a heartbeat.

The technical solution disclosed in the subject matter is a method and apparatus in which an indicating element is used to detect the QoS provided by the transmitter such that the transmitter switches the work channel accordingly. When the amount of retransmissions or failure notifications exceeds a predefined level, data is accumulated in the transmitter's buffer and a notification is issued to the transmitter's processor, which switches the work channel. The receiver switches work channel in a higher frequency, to detect the work channel used by the transmitter and to receive as much data as possible. For example, switching channels in high frequency results in matching the work channel used by the transmitter in less time, which increases the amount of time when data is properly received at the receiver.

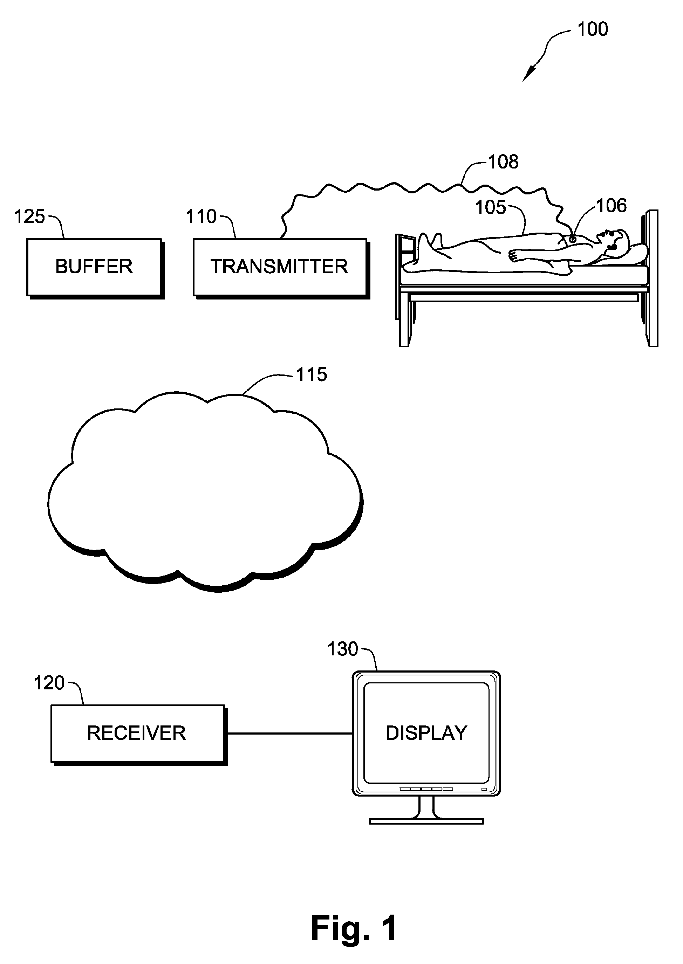

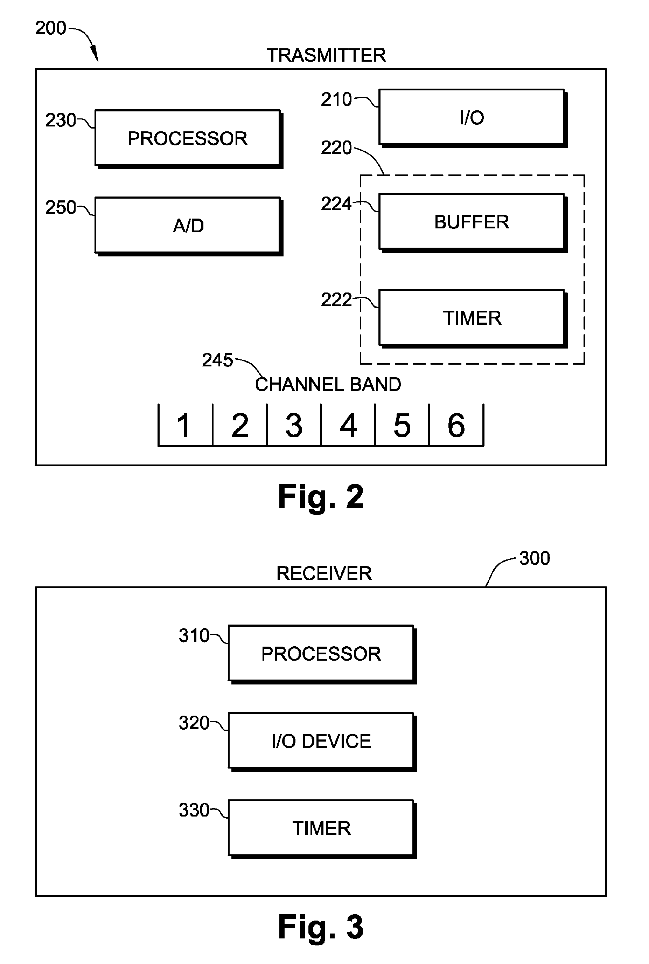

Fig. 1 shows a communication environment used for wireless transmission of medical related data, in accordance with some exemplary embodiments of the subject matter. Communication environment 100 comprises a transmitter module 110 that receives medical related data from a detecting element 106 via a communication module 108, having one or more data channels. Detecting element 106 may be an electrode, a sensor, or any other device used to detect medial data from a patient 105. The medical related data may be ECG, ultrasound and the like. The Communication module 108 may be wired cable containing one or more channels, or a wireless environment for transmitting data from the detecting element 106 to the transmitter module 110. In some exemplary embodiments of the subject matter, the medical related data is received at the transmitter module 110 via one or more transmission mediums defined by physical separation or electrical separation, and contain one or more channels, for example a cable or a frequency division multiplexing channel. The medical related data may be ECG data, which provides the electrical activity of the heart over time, for example data related to voltage. Such one or more channels may be sampled by a sampling module (not shown) before transmitted to a receiver module 120. Sampling the one or more channels is required in case the amount of data received at the transmitter module 110 is higher than the amount of data such module 110 is capable of transmitting, for example sampling each channel every 2ms. Transmitter module 110 is capable of transmitting wireless data in a plurality of potential channels from which one is determined as a work channel. Transmitter module 110 has standard transmission capabilities to provide wireless transmission, preferably using RF channels. Transmitter module 110 comprises an indication module (such as 220 of Fig. 2) for detecting the level of service provided by the transmitter module 110. For example, when transmitter 110 transmits data via a wireless Local Area Network (LAN), about 11 potential channels are allocated, each provides for a 5 MHz bandwidth. The transmission according to the disclosed subject matter is not limited to a specific range of frequencies, and may function in various bandwidths, such as 2.4 GHz and others. Transmitter 110 is capable of switching the work channel according to a command from an external module or from an internal module, in case of an interruption of insufficient number of retransmissions. Data sent through the transmitter module 110 to the receiver module 120 may be transmitted in the form of data packets or as a byte stream. Both transmitter module 110 and receiver module 120 may further comprise an antenna for facilitating the wireless transmission or a connector to connect an external antenna to said transmitter 110 and/or receiver 120.

Transmitter module 110 may comprise an indicating module (220 of Fig. 2) that provides indication related to the amount and type of data transmitted to receiver module 120. The indication module detects the level of QoS of the transmission between the transmitter module 110 and the receiver module 120 to enable the transmitter module to switch the work channel when the level is lower than a predefined value. For example, in case data is not properly transmitted, the number of retransmissions or the amount of time in which data was not properly transmitted to the receiver module 120 is provided to the transmitter module 110. In some exemplary embodiments of the subject matter, the indicating module of receiver module 120 detects the amount of time in which data was not received at the receiver module 120 and notifies the receiver module 120 that the level of QoS is lower than a predefined value. The value may be a function of the amount of data accumulated in transmitter module 110 or the time without proper transmission or receipt of data occurs. The predefined value may be a function of the buffer size, for example, one quarter of the buffer size before notification is issued. Upon notification, processors in the transmitter module 110 and the receiver module 120 determine to switch the work channels. In some exemplary embodiments, the channels are switched according to a predefined list.

In some exemplary embodiments of the subject matter, the transmitter module 110 is connected to the receiver module 120 via a wireless network 115. Such wireless network 115 may allow RF communication, or any other wireless data communication desired by a person skilled in the art. In some exemplary embodiments of the subject matter, transmitter module 110 and receiver module 120 are allocated with identification values, for example ID or address, such that a message sent from the transmitter module 110 is recognized only at the corresponding receiver, the receiver module 120, and not in other receiving devices that may use the wireless network 115. Receiver module 120 may comprise or connected to an output device such as a display 130 or an audio output device, to generate audio or video signal as a function of the data received from the transmitter module 110. Such audio and video signals may comprise visual and auditory signal depicting patient 105 ECG signals or other medical related data received from patient 105, to include heart-rate, other electrical activity generated by patient 105 body and the like. In some exemplary embodiments of the subject matter, receiver module 120 is connected to a computer or another processing unit before the data us received at the display 130. In some exemplary embodiments of the subject matter, two or more receiver modules are connected to one host for receiving data from the same transmitter module, in case the patient is required to move. In such case, only some of the receiver modules are active and actually communicate with the transmitter module. A computerized application connected to the host determines the active receiver modules. The application switches a receiver module after a predetermined time without receiving data in the active receiver modules.

The transmitter module 110 and receiver module 120 may handle QoS and change work channels using applications that preferably comprise software components written in any programming language such as C, C#, C++, Java, VB, VB.Net, or the like, and developed under any development environment, such as Visual Studio.Net, J2EE or the like. It will be appreciated that the server and the clients can alternatively be implemented as firmware ported for a specific processor such as digital signal processor (DSP) or microcontrollers, or can be implemented as hardware or configurable hardware such as field programmable gate array (FPGA) or application specific integrated circuit (ASIC).

Fig. 2 shows a wireless data transmitter, in accordance with some exemplary embodiments of the subject matter. Transmitter module 200 is generally equivalent to transmitter module 110 of figure 1 and is capable of switching work channels used to transmit data over a wireless network. The transmitter module 200 comprises a transceiver for receiving data from the communication module (such as 108 of figure 1) and to transmit data to receiver module 120. In some exemplary embodiments of the disclosed subject matter, transmitter module 200 is connected to a data source (such as 106 of Fig. 1) from which the transmitter module 200 receives data to be transmitted to the receiver module (such as 120 of Fig. 1). Transmitter module 200 may comprise an I/O device 210 for transmitting data to the receiver. Such I/O device 210 may be a single chip transceiver, for example commercially available nRF24 transceiver of Nordic Semiconductor that transmits data in a 2.4 GHz band. In such case, the data is transmitted in packets. In such case, a processing module receives the data before transmission and packetizes said data by adding packet header, data related to the source and destination of the data, ID or address of the receiver module and the like. In other cases, the data may be transmitted in a 500 MHz band, 800 MHz band and the like, as a stream of bytes. Such transceiver transmits the data to the receiver module via a wireless channel, for example an RF channel. An analog to digital converter 250 may also be used in case the data received at the transmitter module 200 is in an analog representation, and the channel or receiver require digital data.

Transmitter module 200 also comprises an indicating module 220 for indicating values of parameters related to the level of Quality of Service (QoS) provided by the transmitter module 200. Such parameters may be the number of retransmissions during a specific period of time, the percentage of data properly transmitted to the receiver, the time elapsed since the last data segment or packet was transmitted, the amount of data stored in the transmitter module 200 and the like. In some embodiments of the subject matter, indicating module 220 comprises a buffer 224 in which sampled data is stored before transmitted to the receiver. In such case, the data is sampled from one or more data sources or channels (such as 106 of figure 1) that transmit data to transmitter module 200. The sampling may be done immediately after the data is receiver at the transmitter module 200, or before transmission to the receiver module. The sampling may be performed according to a set of rules stored in a storage (not shown), or determined by the processor 230. Buffer 224 may be a FIFO buffer, in which the data first stored is the data first read. The buffer 224 may be a ring buffer, having memory capability as desired by a person skilled in the art. The buffer 224 may be connected to processor 230, which performs packetizing if required, or to I/O device 210 for transmission. If there are no interruptions in the work channel, the data is transmitted and removed from the buffer 224. In case the transmission via the work channel is interrupted, for example by another party transmitting at the same band, data is not transmitted and hence not removed from the buffer 224. As a result, the data is accumulated in the buffer 224. In case the amount of data accumulated in the buffer 224 is higher than a predefined amount or percentage of the buffer size, the buffer 224 generates a notification. Such notification may concern the amount of data in the buffer 224 the low QoS provided by the transmitter module 200, and the like. For example, notification is sent in case ECG data is accumulated in the buffer 224 for at least 400ms, or in case the data accumulated in the buffer is higher than 15 percentage of the buffer's capacity. The notification is preferably a data message sent from the indicating module 220 to the processor 230 containing an indication that the buffer has reached a predetermined level. Such notification is received at a processor 230 that determines whether to switch the work channel. Such processor 230 may be a software or hardware module; preferably, a microcontroller unit connected to or resides within the transmitter module 200. Switching channels may continue until the amount of data in buffer 224 is lower than a predefined value.

In some exemplary embodiments of the subject matter, transmitter 200 further comprises a secondary I/O module (not shown) connected to the buffer 224. Such secondary I/O module (not shown) inputs ECG samples into the buffer 224 and removes the ECG samples from a buffer after transmission. In some exemplary embodiments, both input and remove of the samples are performed in parallel. The Time required to input a sample into the buffer 224 is lower than the time required to transmit and remove said sample from the buffer 224. When there is interference on the wireless work channel, many retransmissions are performed and the buffer 224 is filled by the secondary I/O module (not shown), for example in a I/sample rate interval. Input of new samples into the buffer 224 continues until the buffer overflows or the transmitter module 200 receives a "Stop" command from the receiver module.

In some other exemplary embodiments of the disclosed subject matter, at least a portion of the data transmitted from the transmitter module is prioritized. For example, when a heartbeat is detected at the transmitter module, it is prioritized and transmitted before the samples stored in the buffer 224.

In some exemplary embodiments of the subject matter, the transmitter module 200 comprises a channel table identical to a channel table stored at the receiver. In some exemplary embodiments of the disclosed subject matter, when the channel is switched from one work channel to another, the receiver module changes the work channel identically. The receiver module comprises data related to the channels and to the next work channel to switch after another work channel. The timing of the switch is determined when the receiver module stops receiving data from the transmitting module for a predefined period of time, for example the time that equivalent to accumulating 30 percent of the buffer size. In an alternative embodiment of the subject matter, the indicating module 220 comprises a timer 222 for determining the time that elapsed since the last successful transmission of from the last acknowledgement from the receiver. In case the amount of time exceeds a predefined value, a notification is issued as discussed above.

Figure 3 shows a receiver module of wireless data, according to some exemplary embodiments of the disclosed subject matter. Receiver module 300 comprises a processor 310 for handling the flow of communication from a transmitter (such as 200 of Fig. 2). Such processor 310 may be a microcontroller, or any kind of software or hardware module. Processor 310 may contain an A/D converter (not shown) for converting data from analog format to digital format, or vice versa, according to the requirements of the receiver module 300 or the transmitter module (200 of Fig. 2). Receiver module 300 may also comprise an I/O device 320, for transmitting to and receiving data from the transmitter module in a working channel. The I/O device 320 is connected to the processor 310 in case processor 310 determines the work channel used by the I/O device 320, for example when switching work channels. In some exemplary embodiments, the processor 310 reads the data received at the I/O device 320. Receiver module 300 further comprises a timer 330 communicating with the I/O device 320 for detecting the time elapsed since the last data unit or data packet arrived from the transmitter. In some cases, the communication between the timer 330 and the I/O device 320 is performed via processor 310 that determines, for example, when to start and stop measuring time. In case the time without receiving data from the transmitter module exceeds a predefined value, the timer 330 may issue a notification to the processor 310 or to the I/O device 320 to switch a channel. In some exemplary embodiments of the subject matter, the receiver module 300 is not synchronized with the transmitter. As a result, the frequency of switching the channels in the receiver module 300 is significantly higher than the frequency in the transmitter, to follow the work channel determined by the transmitter. For example, after the first switch, generated by the buffer 224, the transmitter switches channels until the amount of data in the buffer is sufficiently low. In some exemplary embodiments, the transmitter switches the work channels every about 400ms, while the receiver switches work channels every about 3ms. In some embodiments, both receiver module and transmitter module are synchronized and switch work channels at substantially the same time, according to channel tables stored in both modules. In an alternative embodiment, the transmitter module switches work channels upon notification from the indicating module, and continues switching until the level of QoS is sufficient. The receiver module then switches work channel much faster, to switch to the unknown work channel used by the transmitter module.

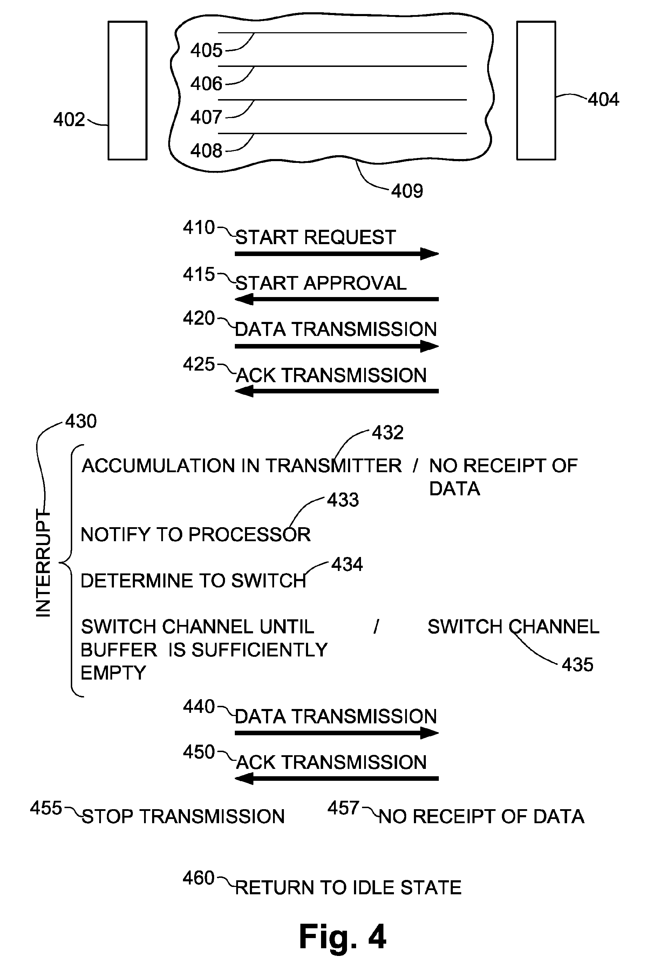

Figure 4 shows a flow of a communication protocol used for transmitting data over a wireless network, according to an exemplary embodiment of the disclosed subject matter. The data is transmitted from the transmitter module 402 to the receiver module 404 via a first work channel 405 selected from a plurality of optional work channels 405, 406, 407, 408 over a network 409. In step 410, the receiver module 404 sends a "start" request to the transmitter module 402. Next, in step 415, the session is established after receipt of "start approval" message from the transmitter module 402. In step 420, the data is transmitted and the transmitter module 402 sends data to the receiver module 404. On step 425, the transmitter module 402 receives acknowledgement messages indicating that the data has been properly received at the receiver module 404.

In accordance with some exemplary embodiments of the subject matter, the transmitter module 402 sends the data to the receiver module 404 using data packets. Hence, the data is sent in addition to packet number, ID of the receiver module 404 and other associated data. According to some exemplary embodiments, the transmitter module 402 stores the packets or streamed data in a buffer (not shown) before transmission. When the data is transmitted from transmitter module 402, or when the acknowledgement message is received at the transmitter, the data is removed from the buffer (not shown). On step 430, an interrupt occurs that prevents proper transmission from the transmitter module 402 to the receiver module 404. The interrupt may be failure to transmit data from transmitter module 402 or failure to receive acknowledgement messages from receiver module 404. When such interrupt 430 occurs, on step 432, data is accumulated in the buffer (not shown) of the transmitter. Similarly, an indication module in the receiver module 404 starts detecting the time elapsed since the last data unit arrived properly.

On step 433, the amount of data in the buffer is detected to be larger than a predefined size or percentage of the buffer size and a notification is sent. The indicating module notifies the processor or another entity in the transmitter module 402 that may switch the work channel or determine to switch a work channel. Time can be measured equivalently to the amount of data stored in the buffer, since the sample rate is known. When the time without proper transmission exceeds a predefined value, such notification may be sent from the timer or the processor. Next, on step 434, the transmitter module 402 determines whether to switch the work channel from the first work channel 405 to another optional work channel, such as work channels 406, 407 and 408. Switching the channel can also be determined without a buffer, in case a timer determines the amount of time in which data was not properly transmitted from transmitter module 402 to receiver module 404, for example by determining the amount of time without an acknowledgement message.

On step 435, the transmitter switches the work channel, preferably upon determination. Switching the work channel may be performed by modulating the signal transmitted from the transmitter module. Similarly, at the receiver side, when data is not received a predefined period of time, the receiver module 404 switches the work channel. In some exemplary embodiments of the disclosed subject matter, the transmitter module 402 switches the work channel continues until the amount of data within the buffer (not shown) is lower than a predefined value. in such case, the receiver module 404 is not coordinated with the transmitter module but switches the work channel as long as data is not received more than a predefined amount of time, for example about 200ms. In some exemplary embodiments of the subject matter, the transmission of data may continue while switching work channels since both the transmitter module 402 and the receiver module 404 switch channels simultaneously since the definitions as to switching are adjusted and stored in both devices. While the receiver module switches work channels trying to locate the work channel used by the transmitter module, data is not lost, but is accumulated in the buffer of the transmitter module. In other embodiments, a channel table stored in both the transmitter module 402 and the receiver module 404 indicates the next work channel. For example, in case the transmission is performed via work channel 406, both receiver module 404 and transmitter module 402 store information that indicates that in case of command from the processor, generated by insufficient QoS, the next work channel is channel 407.

On step 440, after the channel switch is not required, transmission of data is preferably kept at one work channel. in some exemplary embodiments, work channels are switched also when there transmission is proper, but in a lower frequency. On step 450, the receiver module resumes sending acknowledgement messages. On step 455, transmitter module 402 has no further data to transmit, and stops transmitting. In some exemplary embodiments, once there is no data in the transmitter's buffer, a message is sent to the receiver module stating that the transmission terminates. On the receiving side, on step 457, the receiver module 404 detects no receipt of data in a period of time that equals a predefined value. In some exemplary embodiments of the disclosed subject matter, the predefined value that indicates the end of transmission substantially equals the time required for filling the buffer related to the transmitter module 402. Hence, on step 460, both devices switch to idle mode.

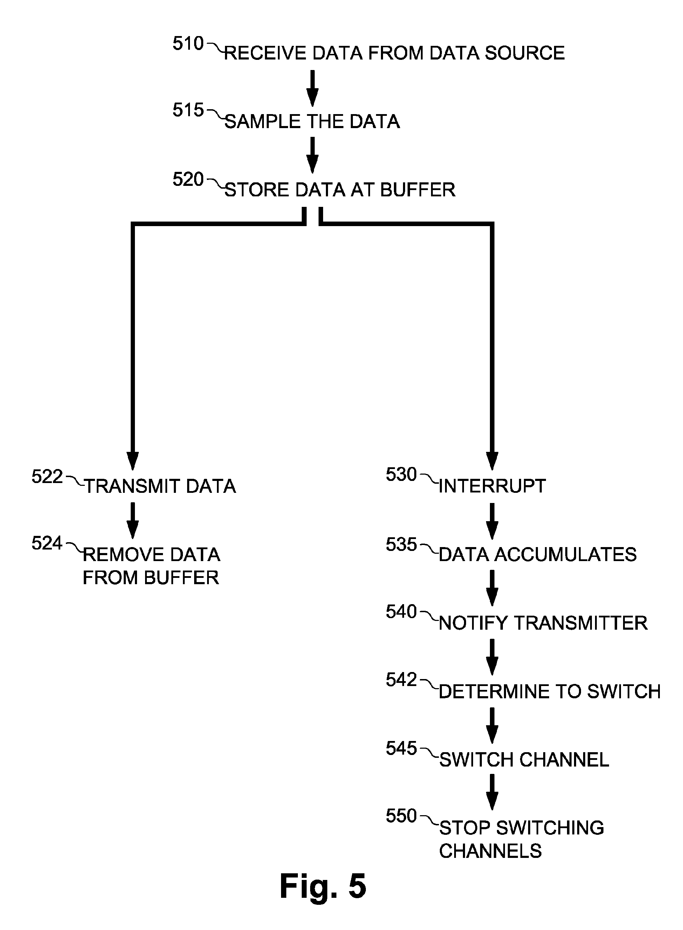

Figure 5 shows a flowchart of steps performed by the transmitting side while transmitting wireless data according to some exemplary embodiments of the disclosed subject matter. On step 510, the transmitter module (such as 200 of Fig. 2) receives data from a data source, such as a plurality of channels that contain data from a detecting element (such as 106 of Fig.1). In some exemplary embodiments, the data represents ECG data signals. In some exemplary embodiments, the transmitter module receives data from a plurality of channels, for example 8 channels or any other configuration desired by a person skilled in the art. In such case, the transmitter module cannot detect all the data transmitted to it and is required to sample the data, as shown on step 515. Sampling may be performed by any method in which a continuous signal is reduced into a discrete signal, and may also comprise a quantization step. The sampling rate may be determined by the buffer size, the bit rate between the transmitter module and the receiver module, channel capabilities and the like. On step 520, the transmitter module stores the data from the data source in a buffer (such as 224 of figure 2) before transmission. The data may be stored in either sampled version or full version. On step 522, the transmitter module starts transmitting the data read from the buffer. Once a data unit, either a packet or a predefined amount of data sent as a byte stream is transmitted, it is removed from the buffer, as shown on step 524. Transmission is preferably performed by a transceiver located within the transmitter module or connected to the buffer or another storage of data received from the data source.

On step 530, an interrupt is detected. Such interrupt indicates an insufficient level of Quality of Service. For example, failure to transmit data from the transmitter or failure to receive acknowledgement messages from the receiver. The interrupt is activated by the processor within the transmitter module, and results in switching the work channel according to a set of rules stored in a storage within the transmitter module. In such case, data is not removed from the buffer and is accumulated and stored within the buffer of the transmitter module, as shown on step 535. In another embodiment of the subject matter, the indicating module is not a buffer but comprises a timer that indicates that the time without successful transmission of a data from the transmitter module is higher than a predefined value. Next, the indication module that uses the timer sends a notification to the processor of the transmitter module, as disclosed on step 540. On step 542, the transmitter module determines whether to switch a work channel according to the notification and a set of rules stored in said transmitter module. On step 545, the transmitter module switches the work channel. Switching the work channel may be performed according to a predefined scheme or table, in a manner that facilitates proper transmission between the transmitter and the receiver. The transmission of packets is continued while the work channels are switched, since the receiver switches channels in a frequency higher than the frequency of channel switching by the transmitter. During transmissions, the packets are properly transmitted and removed from the buffer. As a result, the transmitter and receiver stop switching the work channels. Once data is available again for transmission, the flow goes back to 510, and a start request is sent from the receiver module to the transmitter module.

One possible technical effect of the system and method of the disclosed subject matter is the ability to operate in close proximity with systems using different WLAN channels, 2,4GHz cordless phones, 2,4GHz remote controls, microwave ovens, Bluetooth devices and other proprietary 2,4GHz systems including the same 1200W system with different IDs. It is one technical effect of the disclosed subject matter to switch a work channel automatically over a wireless network using an indication from the buffer. The system of the disclosed subject matter is transparent to the user when an interrupt occurs, yet overcomes the interrupt by automatically switch the work channel. The receiver of the subject matter may be synchronized to the transmitter as disclosed above, or switch work channels in a frequency high enough to track the new work channel of the transmitter. Another technical effect of the subject matter is the ability to transmit wireless signals of medical data, or other image data required in real time performance. This is achieved by the early recovery from the interrupt, as disclosed above.

While the disclosure has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings without departing from the essential scope thereof. Therefore, it is intended that the disclosed subject matter not be limited to the particular embodiment disclosed as the best mode contemplated for carrying out this invention, but only by the claims that follow.

## Claims

1. A transmitter used in a system for transmitting data from a transmitter to a receiver via a work channel over a wireless network (115), the transmitter comprising:
a network interface (210) for receiving and transmitting the data;
storage for storing the data received at the transmitter by the network interface;
a processor (230) for handling the data stored in the storage and determining the work channel;
an indicating module (220) for indicating to the processor that a level of quality of service provided in transmitting the data to the receiver such that the transmitter is capable of switching the work channel as a function of the level of quality of service.

2. The system according to claim 1, wherein the indicating module (220) comprises a buffer (224) residing in the transmitter; said buffer (224) contains the data before transmitted to the receiver.

3. The system according to claim 2, wherein the data is removed from the buffer upon transmission to the receiver.

4. The system according to claim 3, wherein the indicating module (220) indicates the level of quality of service as a function of the data accumulated in the buffer in case said data is not transmitted to the receiver.

5. The system according to claim 1, wherein the storage comprises data related to a plurality of work channels, said data indicates the next work channel to switch.

6. The system according to claim 1, wherein the data is transmitted in a 2.4GHz band.

7. The system according to claim 1, wherein the processor determines to switch a channel until the amount of data in the buffer is lower than a predefined value.

8. A method of transmitting wireless data, comprising:
storing data sent from a data source to a transmitter module in a buffer;
indicating a level of quality of service provided by the transmitter module as a function of an amount of data stored in the buffer.

9. The method according to claim 8, further comprising a step of switching a work channel in case the amount of data stored in the buffer is higher than a predefined value.

10. The method according to claim 8, further comprising a step of transmitting the data stored in the buffer.

11. The method according to claim 8, further comprising a step of removing data from the buffer upon transmission of the data.

12. The method according to claim 8, wherein switching the work channel is performed until the amount of data stored in the buffer is lower than a predefined value.

13. The method according to claim 9, further comprising a step of sampling the data from the data source.

14. A wireless transmission system, comprising
A detecting module (106)
A transmitter module (110) receives medical related data from a detecting module (106) via one or more channels;
A sampling module for sampling the data received by the one or more channels;
A receiver module (120) for receiving the medical related data from the transmitter module (110) over a channel sampled by the sampling module;
wherein the transmitter module (110) switches the work channel upon indication from the sampling module.
